# EUROPÄISCHE PATENTSCHRIFT

(11) **EP 4 143 060 B1**
(45) Veröffentlichungstag und Bekanntmachung des Hinweises auf die Patenterteilung: **01.07.2026**
(21) Anmeldenummer: 21712070.8
(22) Anmeldetag: 10.03.2021
(51) Int. Cl.: B60R 21/013, B60R 21/0132

(54) **VERFAHREN ZUM ERKENNEN EINER KOLLISIONSRICHTUNG EINES FAHRZEUGS, VERFAHREN ZUM ANSTEUERN EINES KOLLISIONSSCHUTZSYSTEMS EINES FAHRZEUGS BEI EINER ERKANNTEN KOLLISIONSRICHTUNG DES FAHRZEUGS, VORRICHTUNG UND FAHRZEUG**
METHOD FOR DETECTING A COLLISION DIRECTION OF A VEHICLE, METHOD FOR ACTUATING A COLLISION PROTECTION SYSTEM OF A VEHICLE WHEN A COLLISION DIRECTION OF THE VEHICLE IS DETECTED, DEVICE, AND A VEHICLE
PROCÉDÉ DE DÉTECTION D'UNE DIRECTION DE COLLISION D'UN VÉHICULE, PROCÉDÉ D'ACTIONNEMENT D'UN SYSTÈME DE PROTECTION CONTRE LES COLLISIONS D'UN VÉHICULE LORS DE LA DÉTECTION D'UNE DIRECTION DE COLLISION DU VÉHICULE, DISPOSITIF ET VÉHICULE

(30) Priorität: 30.04.2020 DE 102020205488
(43) Veröffentlichungstag der Anmeldung: 08.03.2023
(73) Patentinhaber: Robert Bosch GmbH, 70442 Stuttgart (DE)
(72) Erfinder: KAHLE, Ivo, 74343 Sachsenheim (DE); SCHMID, Michael, 70806 Kornwestheim (DE); LANG, Gunther, 70563 Stuttgart (DE); GROSS, Marcus, 74199 Untergruppenbach (DE)
(86) Internationale Anmeldenummer: PCT/EP2021/056019
(87) Internationale Veröffentlichungsnummer: WO 2021/219284

(56) Entgegenhaltungen:
- WO-A1-2011/069939
- DE-A1- 102009 000 516
- DE-A1- 102011 086 006
- DE-A1- 102017 202 534
- DE-T5- 112014 006 344
- US-A1- 2013 289 828

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Zum Erkennen einer Kollision eines Fahrzeugs mit einem Kollisionsobjekt, beispielsweise einem anderen Fahrzeug, können Sensorsignale des Fahrzeugs ausgewertet werden. Bei einer erkannten Kollision können dann Kollisionsschutzsysteme des Fahrzeugs angesteuert werden, beispielsweise ein Airbag. Die Detektion von Fahrzeugcrashs in Airbagsteuergeräten beruht beispielsweise auf einer Information von im Fahrzeug verbauten Beschleunigungs- und/oder Drucksensoren. Die gemessenen Signale dieser Sensoren werden verarbeitet (z.B. gefiltert oder integriert) und gegen Auslöseschwellen verglichen, um zu einer Auslöseentscheidung zu gelangen. Die separaten Detektionsalgorithmen für Frontal- und Heck-Crashes basieren dabei auf der zentral gemessenen x-Beschleunigung, d.h. der Beschleunigung entlang der Longitudinalachse des Fahrzeugs. US 2013/289828 offenbart ein Verfahren zum Erkennen einer Kollisionsrichtung eines Fahrzeugs, wobei das Verfahren folgende Schritte umfasst: Vergleichen eines ersten Beschleunigungssignals mit einem ersten Schwellenwert und einem zweiten Schwellenwert, um ein erstes Kollisionsrichtungssignal zu bestimmen, das eine Richtung der Kollision anzeigt, wobei das erste Beschleunigungssignal eine longitudinale Beschleunigung des Fahrzeugs repräsentiert und wobei der erste Schwellenwert und der zweite Schwellenwert unterschiedliche Vorzeichen aufweisen, um zwischen zwei entgegengesetzten Kollisionsrichtungen unterscheiden zu können; Vergleichen eines zweiten Beschleunigungssignals mit einem weiteren Schwellenwert, um ein weiteres Kollisionsrichtungssignal zu bestimmen, das eine Richtung der Kollision anzeigt; Bestimmen eines Ergebnissignals unter Verwendung des ersten Kollisionsrichtungssignals und des weiteren Kollisionsrichtungssignals, wobei das Ergebnissignal die von dem ersten Kollisionsrichtungssignal und dem weiteren Kollisionsrichtungssignal angezeigte Richtung als tatsächliche Kollisionsrichtung angibt, wenn die durch das erste Kollisionsrichtungssignal und das weitere Kollisionsrichtungssignal angezeigten Kollisionsrichtungen übereinstimmen.

### Offenbarung der Erfindung

Vor diesem Hintergrund werden mit dem hier vorgestellten Ansatz ein Verfahren zum Erkennen einer Kollisionsrichtung eines Fahrzeugs, ein Verfahren zum Ansteuern eines Kollisionsschutzsystems eines Fahrzeugs bei einer erkannten Kollisionsrichtung des Fahrzeugs, weiterhin eine Vorrichtung, die diese Verfahren verwendet, ein Fahrzeug mit der Vorrichtung sowie schließlich ein entsprechendes Computerprogramm gemäß den Hauptansprüchen 1, 8, 11, 13 vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Mit dem hier vorgestellten Ansatz ist es möglich, eine aktuelle Kollisionsrichtung sicher zu erkennen. Dabei ist es möglich, in Bezug auf eine Fahrtrichtung des Fahrzeugs zwei longitudinale Kollisionsrichtungen als gleichartig zu berücksichtigen, ohne dass eine Kollisionsrichtung, beispielsweise die frontale, bevorzugt wird. Dies ist beispielsweise vorteilhaft in einem Fahrzeug mit spiegelsymmetrisch angeordneten Insassenpositionen wie bei einem Robo-Taxi. Die hier vorgestellte Kollisionsrichtungserkennung ist zudem dynamisch, eine aktuell erkannte Kollisionsrichtung kann verifiziert werden, und gegebenenfalls auch geändert werden, was insbesondere bei einer multiplen Kollision, beispielsweise einen Frontal-Crash gefolgt von einem Heckaufprall, vorteilhaft ist. Es wird ein Verfahren zum Erkennen einer Kollisionsrichtung eines Fahrzeugs vorgestellt. Das Verfahren umfasst einen Schritt des Vergleichens eines ersten Beschleunigungssignals mit einem ersten Schwellenwert und einem zweiten Schwellenwert, einen Schritt des Vergleichens eines zweiten Beschleunigungssignals mit einem weiteren Schwellenwert und einen Schritt des Bestimmens eines Ergebnissignals. Im Schritt des Vergleichens des ersten Beschleunigungssignals mit dem ersten Schwellenwert und dem zweiten Schwellenwert repräsentiert das erste Beschleunigungssignal eine longitudinale Beschleunigung des Fahrzeugs. Der erste Schwellenwert und der zweite Schwellenwert weisen unterschiedliche Vorzeichen auf, um zwischen zwei entgegengesetzten Richtungen der Kollision unterscheiden zu können. Der Vergleich wird durchgeführt, um ein eine Richtung der Kollision anzeigendes erstes Kollisionsrichtungssignal zu bestimmen. Im Schritt des Vergleichens des zweiten Beschleunigungssignals mit dem weiteren Schwellenwert repräsentiert das zweite Beschleunigungssignal die einer Glättung unterzogene Beschleunigung des Fahrzeugs. Zudem wird der Vergleich durchgeführt, um ein weiteres eine Richtung der Kollision anzeigendes Kollisionsrichtungssignal zu bestimmen. Im Schritt des Bestimmens wird unter Verwendung des ersten Kollisionsrichtungssignals und des weiteren Kollisionsrichtungssignals das Ergebnissignal bestimmt. Das Ergebnissignal zeigt dann die von dem ersten Kollisionsrichtungssignal und dem weiteren Kollisionsrichtungssignal angezeigte Richtung als eine tatsächliche Kollisionsrichtung an, wenn die Richtung der Kollision des ersten Kollisionsrichtungssignals und die Richtung der Kollision des weiteren Kollisionsrichtungssignals übereinstimmen.

Das Fahrzeug kann beispielsweise ein Kraftfahrzeug, ein Lastkraftwagen oder ein Schienenfahrzeug sein. Zudem kann das Fahrzeug einen teilautomatisierten oder vollautomatisierten Fahrbetrieb aufweisen. Die Kollisionsrichtung kann entlang der Fahrtrichtung verlaufen, es kann als die tatsächliche bzw. aktuelle Kollisionsrichtung beispielsweise eine Frontalkollision oder Heckkollision erkannt werden. Das erste Beschleunigungssignal kann beispielsweise eine mittels eines Beschleunigungssensors des Fahrzeugs erfasste aktuelle Beschleunigung des Fahrzeugs sein. Das erste Beschleunigungssignal kann zum Bereitstellen des zweiten Beschleunigungssignals geglättet werden, beispielsweise um für das zweite Beschleunigungssignal eine stärkere Tiefpass-Charakteristik zu erhalten. Der erste und der zweite Schwellenwert können von Null verschieden und optional betragsmäßig gleich sein. Zudem können der ersten und der zweite Schwellenwert eine Detektionsschwelle zum Detektieren einer Kollision repräsentieren, wobei je nach Vorzeichen des Schwellenwerts ein Überschreiten oder Unterschreiten des Schwellenwerts die Kollision anzeigt. Die Richtung der Kollision zum Bereitstellen des Kollisionsrichtungssignals kann aus dem Vorzeichen der Schwellenwerte abgeleitet werden. Der weitere Schwellenwert kann beispielsweise Null sein. Die Richtung der Kollision kann dann beispielsweise durch ein Überschreiten oder Unterschreiten des weiteren Schwellenwerts abgeleitet werden.

Gemäß einer Ausführungsform kann das Verfahren einen Schritt des Bereitstellens des Ergebnissignals über eine einzige elektrische Leitung aufweisen. Das Ergebnissignal weist dabei die erkannte aktuelle Kollisionsrichtung von zwei entgegengesetzten Kollisionsrichtungen auf. Dadurch ist es vorteilhafterweise möglich, zum Bereitstellen des Ergebnissignals über die eine elektrische Leitung einen Schalter mit einem Ausgang zu verwenden.

Zudem sind keine getrennten Auswertepfade für die beiden Richtungen erforderlich.

Die Schritte des Verfahrens können gemäß einer Ausführungsform wiederholt ausgeführt werden, um einen Wechsel der tatsächlichen Kollisionsrichtung während der Kollision zu erkennen, und unter Verwendung des Ergebnissignals anzuzeigen. Dies ermöglicht vorteilhafterweise eine dynamische Kollisionsrichtungserkennung und dadurch auch ein schnelles Umschalten bei wechselnder Kollisionsrichtung, beispielsweise bei einer multiplen Kollision, beispielsweise um wie nachfolgend beschrieben Fahrzeugkomponenten oder Fahrtsysteme richtungsbezogen anzusteuern.

Das Verfahren kann gemäß einer Ausführungsform auch einen Schritt des Einlesens des ersten Beschleunigungssignals über eine Schnittstelle zu einem Beschleunigungssensor aufweisen. Das erste Beschleunigungssignal kann beispielsweise Sensorrohdaten umfassen oder ein bereits verarbeitetes Signal sein, beispielsweise Tiefpass-gefiltert sein.

Zudem kann das zweite Beschleunigungssignal gemäß einer Ausführungsform auch im Schritt des Einlesens eingelesen werden. Alternativ dazu kann das Verfahren auch einen Schritt des Glättens des ersten Beschleunigungssignals aufweisen. Im Schritt des Glättens kann das zweite Beschleunigungssignal unter Verwendung einer Tiefpass-Filterung des ersten Beschleunigungssignals ermittelt werden. Dies unterstützt vorteilhafterweise eine Erkennung beispielsweise bei einer starken Oszillation des ersten Beschleunigungssignals.

Im Schritt des Vergleichens des ersten Beschleunigungssignals kann das erste Kollisionsrichtungssignal unabhängig von der Richtung der Kollision eine gleichartige Hysterese aufweisen. Damit kann ein erstmaliges kurzzeitiges Über- oder Unterschreiten des ersten oder zweiten Schwellenwerts, also ein kurzzeitiger Über- oder Unterschwinger des ersten Beschleunigungssignals unter den ersten oder zweiten Schwellwert ohne Auswirkung auf die erkannte Kollisionsrichtung bleiben. Dies erhöht vorteilhafterweise eine Robustheit der Kollisionsrichtungserkennung. Die gleichartige Hysterese ist vorteilhaft, um eine symmetrische Kollisionsrichtungserkennung zu ermöglichen, bei der keine der zwei entgegengesetzten Kollisionsrichtungen bevorzugt wird, was beispielsweise bei einer Anwendung des Verfahrens in Verbindung mit einem Fahrzeug mit spiegelsymmetrisch angeordneten Insassenpositionen vorteilhaft ist.

Dabei kann eine Zeitdauer der Hysterese gestartet werden, wenn das erste Beschleunigungssignal betragsmäßig unter den ersten Schwellenwert oder den zweiten Schwellenwert fällt, und nicht gestartet werden, wenn das erste Beschleunigungssignal betragsmäßig über den ersten Schwellenwert oder den zweiten Schwellenwert steigt. Auf diese Weise kann ein erstmaliges betragsmäßiges Überschreiten eines der Schwellenwerte sofort zu einer Erkennung der Kollisionsrichtung genutzt werden. Ein späteres betragsmäßiges Unterschreiten kann dagegen nur dann zu einer Änderung der erkannten Kollisionsrichtung führen, wenn das Unterschreiten während der Zeitdauer der Hysterese anhält.

Ferner kann im Schritt des Bestimmens das Ergebnissignal gemäß einer Ausführungsform zusätzlich unter Verwendung zumindest eines Sensorsignals bestimmt werden. Das Sensorsignal kann ein von einem peripheren Sensor des Fahrzeugs bereitgestelltes Signal repräsentieren. Dazu kann das Sensorsignal beispielsweise über eine Schnittstelle zu einer Abstandssensoreinrichtung des Fahrzeugs eingelesen werden, oder über eine Schnittstelle zu einer in einem Verformungsbereich des Fahrzeugs angeordneten Sensoreinrichtung, beispielsweise einem Sensor in einem Front- oder Heckbereich des Fahrzeugs. Dies kann vorteilhafterweise eine Zuverlässigkeit der Kollisionsrichtungserkennung erhöhen.

Im Schritt des Vergleichens des ersten Beschleunigungssignals kann gemäß einer Ausführungsform zudem ein Kollisionsstartsignal bestimmt werden, das eine erkannte Kollision repräsentiert. Das Kollisionsstartsignal kann dazu beispielsweise durch einen betragsmäßigen Vergleich des ersten Beschleunigungssignals mit dem ersten Schwellenwert und dem zweiten Schwellenwert bestimmt werden. Dazu können der erste Schwellenwert und der zweite Schwellenwert einen Betrag aufweisen, der einen vorbestimmten Grenzwert übersteigt. Vorteilhafterweise ist es somit möglich, zusätzlich zu der Kollisionsrichtung auch den Kollisionsstart zu erfassen.

Es wird zudem ein Verfahren zum Ansteuern eines Kollisionsschutzsystems eines Fahrzeugs bei einer erkannten Kollisionsrichtung des Fahrzeugs vorgestellt. Das Kollisionsschutzsystem umfasst dabei zumindest ein Untersystem mit zumindest einem ersten einer ersten Kollisionsrichtung zugeordneten Kollisionsschutzmittel und mit zumindest einem zweiten einer zweiten Kollisionsrichtung zugeordneten Kollisionsschutzmittel. Das Verfahren weist einen Schritt des Einlesens und einen Schritt des Bestimmens auf. Im Schritt des Einlesens wird ein Ergebnissignal eingelesen, das die erkannte Kollisionsrichtung anzeigt. Das Ergebnissignal wird dazu in einer Ausführungsform des vorhergehend beschriebenen Verfahrens zum Erkennen einer Kollisionsrichtung eines Fahrzeugs bestimmt. Im Schritt des Bestimmens wird unter Verwendung des Ergebnissignals ein Steuersignal zum wahlweisen Ansteuern des ersten Kollisionsschutzmittels oder des zweiten Kollisionsschutzmittels bestimmt. Vorteilhafterweise wird dadurch ein richtungsbezogenes Ansteuern von Kollisionsschutzmitteln ermöglicht.

Dazu kann gemäß einer Ausführungsform im Schritt des Bestimmens das Steuersignal zum Ansteuern des ersten Kollisionsschutzmittels bestimmt wird, wenn das Ergebnissignal die erste Kollisionsrichtung anzeigt, und zum Ansteuern des zweiten Kollisionsschutzmittels, wenn das Ergebnissignal die zweite Kollisionsrichtung anzeigt. Dadurch ist es beispielsweise möglich, bei einem erkannten Wechsel der Kollisionsrichtung auch ein Ansteuern der Kollisionsschutzmittel zu ändern, beispielsweise um eine Gurtstraffung oder eine Airbag-Auslösung richtungsbezogen anzusteuern.

Das Verfahren kann gemäß einer Ausführungsform ferner einen Schritt des Auswählens des Untersystems des Kollisionsschutzsystems mit dem ersten Kollisionsschutzmittel und dem zweiten Kollisionsschutzmittel aufweisen. Das Untersystem kann unter Verwendung eines dritten Beschleunigungssignals ausgewählt werden. Das dritte Beschleunigungssignal kann einen Betrag des ersten Beschleunigungssignals repräsentieren. Beim Auswählen des Untersystems kann somit beispielsweise eine Kategorie des Kollisionsschutzsystems ausgewählt werden, um eine bestimmte Kategorie oder Gruppe von Kollisionsschutzmitteln abhängig von der erkannten Kollisionsrichtung auszuwählen. Beispielsweise kann als Untersystem ein Airbagsystem oder ein System zum Ansteuern einer Gurtstraffung ausgewählt werden. Ein Ansteuern nicht nur einzelner Kollisionsschutzmittel, sondern einer Kategorie oder Gruppe von Kollisionsschutzmitteln ist vorteilhaft, beispielsweise um bei einer Kollision alle Gurtstraffer zu aktivieren, während eine Auswahl an Airbags richtungsbezogen erfolgen kann. Dazu kann der Schritt des Auswählens vor oder zeitgleich zu dem Schritt des Bestimmens ausgeführt werden.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante der hier vorgestellten Verfahren in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird zudem ein Fahrzeug vorgestellt. Das Fahrzeug umfasst eine Vorrichtung, die ausgebildet ist, die Schritte einer Ausführungsform der obenstehend beschriebenen Verfahren anzusteuern und zusätzlich oder alternativ auszuführen. Zudem weist das Fahrzeug zumindest zwei spiegelsymmetrisch angeordnete Insassenpositionen auf und umfasst das Kollisionsschutzsystem. Das erste Kollisionsschutzmittel und das zweite Kollisionsschutzmittel sind dabei spiegelsymmetrisch angeordnet.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Fahrzeugs mit einer Vorrichtung gemäß einem Ausführungsbeispiel;
Fig. 2 ein Ablaufdiagramm eines Verfahrens zum Erkennen einer Kollisionsrichtung eines Fahrzeugs gemäß einem Ausführungsbeispiel;
Fig. 3 ein Ablaufdiagramm eines Verfahrens zum Ansteuern eines Kollisionsschutzsystems eines Fahrzeugs bei einer erkannten Kollisionsrichtung des Fahrzeugs gemäß einem Ausführungsbeispiel;
Fig. 4 und 5 je ein Ausführungsbeispiel eines Fahrzeugs mit spiegelsymmetrisch angeordnete Insassenpositionen;
Fig. 6 eine Darstellung eines zeitlichen Verlaufs eines ersten Beschleunigungssignals gemäß einem Ausführungsbeispiel;
Fig. 7 eine Darstellung eines zeitlichen Verlaufs eines ersten Beschleunigungssignals gemäß einem Ausführungsbeispiel;
Fig. 8 eine Darstellung eines zeitlichen Verlaufs eines ersten Beschleunigungssignals und eines zweiten Beschleunigungssignals gemäß einem Ausführungsbeispiel;
Fig. 9 eine Darstellung eines zeitlichen Verlaufs eines ersten Beschleunigungssignals und eines zweiten Beschleunigungssignals gemäß einem Ausführungsbeispiel;
Fig. 10 eine Darstellung eines zeitlichen Verlaufs eines ersten Beschleunigungssignals und eines zweiten Beschleunigungssignals bei einem Wechsel der Kollisionsrichtung gemäß einem Ausführungsbeispiel; und
Fig. 11 ein Blockschaltbild einer Vorrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

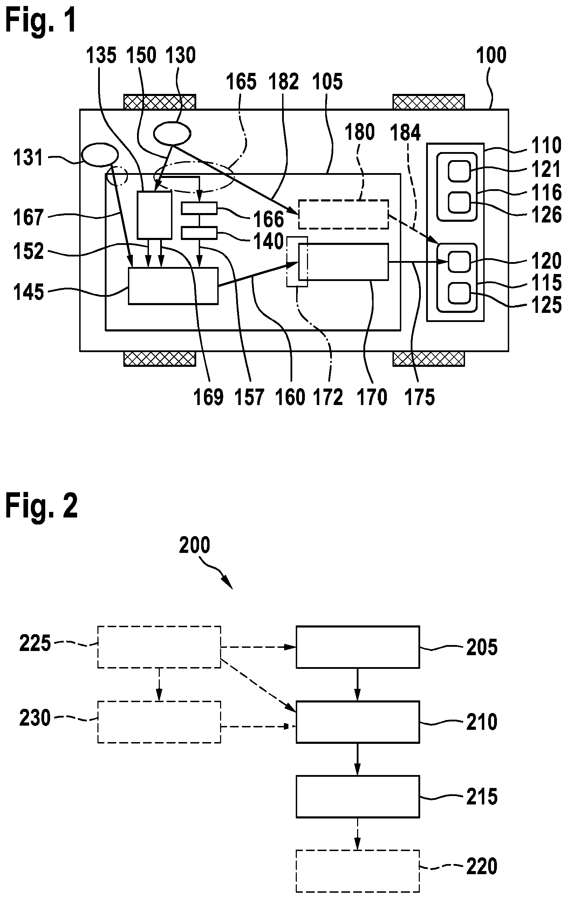

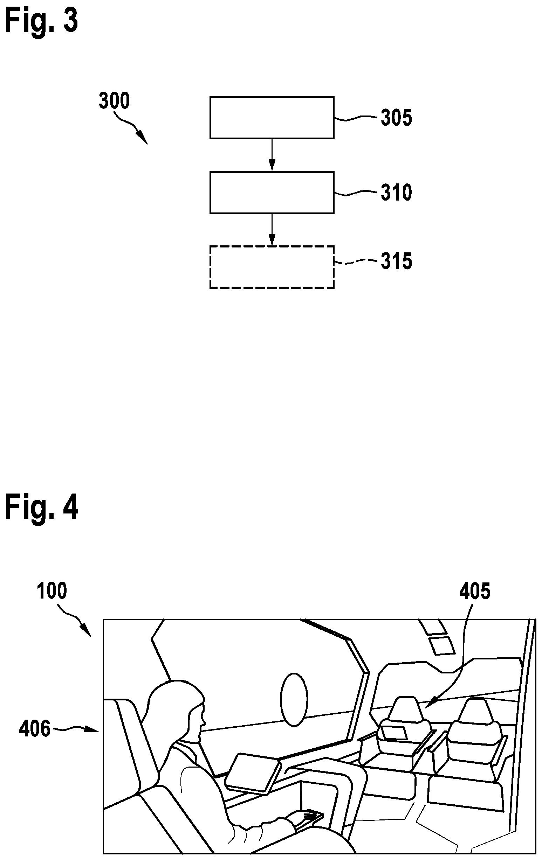

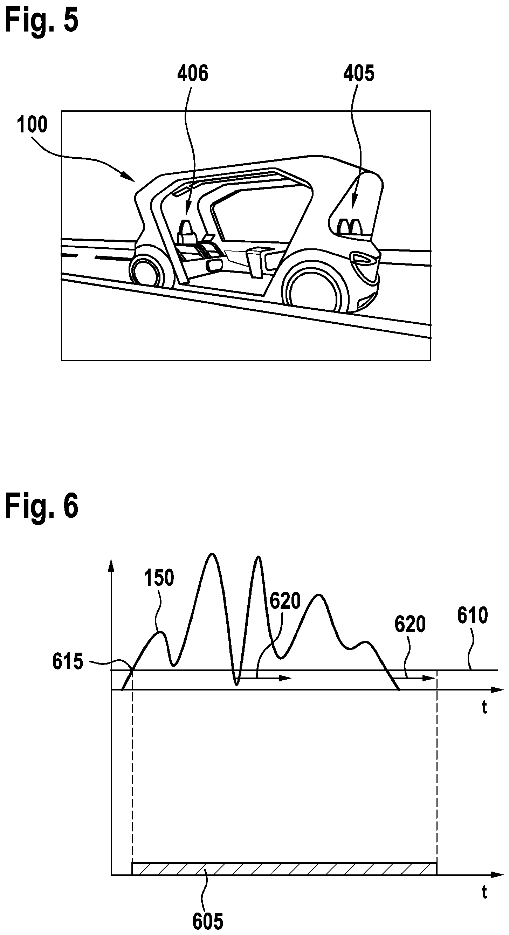

Fig. 1 zeigt eine schematische Darstellung eines Fahrzeugs 100 mit einer Vorrichtung 105 gemäß einem Ausführungsbeispiel. Das Fahrzeug 100 umfasst ein Kollisionsschutzsystem 110 mit hier beispielhaft zwei Untersystemen 115, 116. Die Untersysteme 115, 116 weisen je ein erstes einer ersten Kollisionsrichtung zugeordneten Kollisionsschutzmittel 120, 121 und zumindest ein zweites einer zweiten Kollisionsrichtung zugeordnetes Kollisionsschutzmittel 125, 126 auf. Das erste Kollisionsschutzmittel 120, 121 und das zweite Kollisionsschutzmittel 125, 125 sind spiegelsymmetrisch zueinander angeordnet, beispielsweise an je unterschiedlichen Enden des Fahrzeugs 100 einander spiegelsymmetrisch gegenüberliegend. Das Fahrzeug 100 weist zudem zumindest zwei spiegelsymmetrisch angeordnete Insassenpositionen auf, wie nachfolgend beispielhaft anhand der Figuren 4 und 5 gezeigt. Ferner umfasst das Fahrzeug 100 hier beispielhaft einen Beschleunigungssensor 130 und einen peripheren Sensor 131, beispielsweise einen Abstandssensor oder ein in einem bei der Kollision verformbaren Bereich des Fahrzeugs 100 angeordneter Sensor, beispielsweise ein sogenannter "Upfrontsensor". Bei dem Beschleunigungssensor 130 handelt es sich beispielsweise um einen zentral im Fahrzeug 100 angeordneten Sensor, mit dem sowohl der ersten Kollisionsrichtung als auch der zweiten Kollisionsrichtung zugeordnete Beschleunigungen erfasst werden können.

Zudem umfasst das Fahrzeug 100 die Vorrichtung 105. Die Vorrichtung 105 ist zum Erkennen einer Kollisionsrichtung eines Fahrzeugs 100 ausgebildet. Zudem ist die Vorrichtung 105 bei einer erkannten Kollisionsrichtung des Fahrzeugs 100 zum Ansteuern des Kollisionsschutzsystems 110 ausgebildet.

Zum Erkennen der Kollisionsrichtung des Fahrzeugs 100 umfasst die Vorrichtung 105 eine erste Vergleichseinrichtung 135, eine zweite Vergleichseinrichtung 140 und eine Bestimmungseinrichtung 145. Die erste Vergleichseinrichtung 135 ist ausgebildet, ein erstes Beschleunigungssignal 150 mit einem ersten Schwellenwert und einem zweiten Schwellenwert zu vergleichen, um ein eine Richtung der Kollision anzeigendes erstes Kollisionsrichtungssignal 152 zu bestimmen. Das erste Beschleunigungssignal 150 repräsentiert dabei eine longitudinale Beschleunigung des Fahrzeugs 100. Der erste Schwellenwert und der zweite Schwellenwert weisen unterschiedliche Vorzeichen auf, um zwischen zwei entgegengesetzten Richtungen der Kollision unterscheiden zu können. Die zweite Vergleichseinrichtung 140 ist ausgebildet, ein zweites Beschleunigungssignal 155 mit einem weiteren Schwellenwert zu vergleichen, um ein weiteres eine Richtung der Kollision anzeigendes Kollisionsrichtungssignal 157 zu bestimmen. Das zweite Beschleunigungssignal 155 repräsentiert die einer Glättung unterzogene Beschleunigung des Fahrzeugs 100. Die Bestimmungseinrichtung 145 ist ausgebildet, unter Verwendung des ersten Kollisionsrichtungssignals 152 und des weiteren Kollisionsrichtungssignals 157 ein Ergebnissignal 160 zu bestimmen. Das Ergebnissignal 160 zeigt die von dem ersten Kollisionsrichtungssignal 152 und dem weiteren Kollisionsrichtungssignal 157 angezeigte Richtung als eine tatsächliche Kollisionsrichtung an, wenn die Richtung der Kollision des ersten Kollisionsrichtungssignals 152 und die Richtung der Kollision des weiteren Kollisionsrichtungssignals 157 übereinstimmen.

Gemäß dem hier gezeigten Ausführungsbeispiel ist die Vorrichtung 105 dazu ausgebildet, das erste Beschleunigungssignal 150 über eine Schnittstelle 165 zu dem Beschleunigungssensor 130 einzulesen.

Die Vorrichtung 105 weist gemäß dem hier gezeigten Ausführungsbeispiel zudem eine Glättungseinrichtung 166 auf. Die Glättungseinrichtung 166 ist dazu ausgebildet, das erste Beschleunigungssignal 150 unter Verwendung einer Tiefpass-Filterung zu glätten, um das zweite Beschleunigungssignal 155 zu ermitteln. Alternativ dazu kann die Vorrichtung 105 auch dazu ausgebildet sein, das zweite Beschleunigungssignal 155 über eine Schnittstelle 165 zu dem Beschleunigungssensor 130 einzulesen. In diesem Fall ist der Beschleunigungssensor 130 dazu ausgebildet, das die Glättung des ersten Beschleunigungssignals 150 repräsentierende zweite Beschleunigungssignal 155 bereitzustellen.

Zudem ist die Vorrichtung 105 dazu ausgebildet, das Vergleichen des ersten Beschleunigungssignals 150 mit dem ersten und zweiten Schwellenwert und das Vergleichen des zweiten Beschleunigungssignals 155 mit dem weiteren Schwellenwert zum Bereitstellen des ersten Kollisionsrichtungssignals 152 und des weiteren Kollisionsrichtungssignals 157 sowie das Bestimmen des Ergebnissignals 160 wiederholt auszuführen, um einen Wechsel der tatsächlichen Kollisionsrichtung während der Kollision zu erkennen, und unter Verwendung des Ergebnissignals 160 anzuzeigen.

Die Bestimmungseinrichtung 145 ist gemäß einem Ausführungsbeispiel zudem dazu ausgebildet, das Ergebnissignal 160 zusätzlich unter Verwendung zumindest einen Sensorsignals 167 zu bestimmen. Das Sensorsignal 167 repräsentiert ein von dem peripheren Sensor 131 des Fahrzeugs 100 bereitgestelltes Signal. Beispielsweise kann das Sensorsignal 167 zum zusätzlichen Absichern des Ergebnissignals 160 verwendet werden.

Die erste Vergleichseinrichtung 135 ist gemäß dem hier gezeigten Ausführungsbeispiel zudem dazu ausgebildet, beim Vergleichen des ersten Beschleunigungssignals 150 mit dem ersten und zweiten Schwellenwert ein Kollisionsstartsignal 169 zu bestimmen, das eine erkannte Kollision repräsentiert.

Zum Ansteuern des Kollisionsschutzsystems 110 bei einer erkannten Kollisionsrichtung umfasst die Vorrichtung 105 eine weitere Bestimmungseinrichtung 170 mit einer Einleseschnittstelle 172. Die Bestimmungseinrichtung 170 ist dazu ausgebildet, das Ergebnissignal 160 über die Einleseschnittstelle 172 einzulesen. Zudem ist die Bestimmungseinrichtung 170 dazu ausgebildet unter Verwendung des Ergebnissignals 160 ein Steuersignal 175 zum wahlweisen Ansteuern des ersten Kollisionsschutzmittels 120 oder des zweiten Kollisionsschutzmittels 125 zu bestimmen.

Zudem ist die Bestimmungseinrichtung 170 gemäß einem Ausführungsbeispiel dazu ausgebildet, das Steuersignal 175 zum Ansteuern des ersten Kollisionsschutzmittels 120 zu bestimmen, wenn das Ergebnissignal 160 die erste Kollisionsrichtung anzeigt, und zum Ansteuern des zweiten Kollisionsschutzmittels 125, wenn das Ergebnissignal 160 die zweite Kollisionsrichtung anzeigt.

Die Vorrichtung 105 weist zum Ansteuern des Kollisionsschutzsystems 110 gemäß dem hier gezeigten Ausführungsbeispiel ferner eine Auswahleinrichtung 180 auf. Die Auswahleinrichtung 180 ist dazu ausgebildet, unter Verwendung eines dritten Beschleunigungssignals 182, das einen Betrag des ersten Beschleunigungssignals 150 repräsentiert, eines der Untersysteme 110, 115 jeweils mit dem ersten Kollisionsschutzmittel 120, 121 und dem zweiten Kollisionsschutzmittel 125, 126 auszuwählen. Dazu wird das dritte Beschleunigungssignal 182 beispielsweise wie hier gezeigt von dem Beschleunigungssensor 130 bereitgestellt. Zum Ansteuern eines der ausgewählten Untersysteme 110, 115 wird ein Auswahlsignal 184 bereitgestellt. Das Auswählen des Untersystems 110, 115 erfolgt vor oder zeitgleich mit dem Bestimmen des Steuersignals 175.

Fig. 2 zeigt ein Ablaufdiagramm eines Verfahrens 200 zum Erkennen einer Kollisionsrichtung eines Fahrzeugs gemäß einem Ausführungsbeispiel. Das Verfahren 200 ist unter Verwendung eines Ausführungsbeispiels der vorhergehend beschriebenen Vorrichtung ausführbar. Das Verfahren 200 umfasst zumindest einen Schritt 205 des Vergleichens eines ersten Beschleunigungssignals, einen Schritt 210 des Vergleichens eines zweiten Beschleunigungssignals und einen Schritt 215 des Bestimmens eines Ergebnissignals.

Im Schritt 205 wird das erste Beschleunigungssignals mit einem ersten Schwellenwert und einem zweiten Schwellenwert verglichen, um ein eine Richtung der Kollision anzeigendes erstes Kollisionsrichtungssignal zu bestimmen. Das erste Beschleunigungssignal repräsentiert eine longitudinale Beschleunigung des Fahrzeugs. Zudem weisen der erste Schwellenwert und der zweite Schwellenwert unterschiedliche Vorzeichen auf, um zwischen zwei entgegengesetzten Richtungen der Kollision unterscheiden zu können.

Im Schritt 210 wird das zweite Beschleunigungssignal mit einem weiteren Schwellenwert verglichen, um ein weiteres eine Richtung der Kollision anzeigendes Kollisionsrichtungssignal zu bestimmen. Das zweite Beschleunigungssignal repräsentiert die einer Glättung unterzogene Beschleunigung des Fahrzeugs.

Im Schritt 215 des Bestimmens wird das Ergebnissignal unter Verwendung des ersten Kollisionsrichtungssignals und des weiteren Kollisionsrichtungssignals bestimmt. Das Ergebnissignal zeigt dabei die von dem ersten Kollisionsrichtungssignal und dem weiteren Kollisionsrichtungssignal angezeigte Richtung nur dann als eine tatsächliche Kollisionsrichtung an, wenn die Richtung der Kollision des ersten Kollisionsrichtungssignals und die Richtung der Kollision des weiteren Kollisionsrichtungssignals übereinstimmen. Auf diese Weise kann verhindert werden, dass das Ergebnissignal aufgrund eines kurzfristigen Rückschwingens des ersten Beschleunigungssignal, bei dem gegebenenfalls sogar sowohl der erste als auch der zweite Schwellenwert passiert werden, eine falsche Kollisionsrichtung anzeigt.

Gemäß einem Ausführungsbeispiel des Verfahrens 200 sind zumindest die Schritte 205, 210 und 215 wiederholt ausführbar, um einen Wechsel der tatsächlichen Kollisionsrichtung während der Kollision zu erkennen, und unter Verwendung des Ergebnissignals anzuzeigen.

Das Verfahren umfasst gemäß einem Ausführungsbeispiel zudem einen Schritt 220 des Bereitstellens des Ergebnissignals über eine einzige elektrische Leitung. Der Schritt 220 ist optional nach dem Schritt 215 des Bestimmens ausführbar.

Zudem umfasst das Verfahren 200 gemäß dem hier gezeigten Ausführungsbeispiel einen Schritt 225 des Einlesens des ersten Beschleunigungssignals über eine Schnittstelle zu einem Beschleunigungssensor. Der Schritt 225 ist vor dem Schritt 205 ausführbar. Optional wird im Schritt 225 des Einlesens auch das zweite Beschleunigungssignal eingelesen.

Ferner umfasst das Verfahren 200 gemäß dem hier gezeigten Ausführungsbeispiel einen optionalen Schritt 230 des Glättens des ersten Beschleunigungssignals unter Verwendung einer Tiefpass-Filterung, um das zweite Beschleunigungssignal zu ermitteln. Der Schritt 230 des Glättens ist optional vor dem Schritt 210 ausführbar.

Fig. 3 zeigt ein Ablaufdiagramm eines Verfahrens 300 zum Ansteuern eines Kollisionsschutzsystems eines Fahrzeugs bei einer erkannten Kollisionsrichtung des Fahrzeugs gemäß einem Ausführungsbeispiel. Das Verfahren 300 ist unter Verwendung eines Ausführungsbeispiels der vorhergehend beschriebenen Vorrichtung ausführbar. Zudem ist das Verfahren 300 in Verbindung mit einem Fahrzeug ausführbar, wie es vorhergehend anhand von Figur 1 beschrieben ist. Das Kollisionsschutzsystem des Fahrzeugs umfasst zumindest ein Untersystem mit zumindest einem ersten einer ersten Kollisionsrichtung zugeordneten Kollisionsschutzmittel und zumindest einem zweiten einer zweiten Kollisionsrichtung zugeordneten Kollisionsschutzmittel.

Das Verfahren 300 umfasst zumindest einen Schritt 305 des Einlesens eines Ergebnissignals und einen Schritt 310 des Bestimmens eines Steuersignals. Im Schritt 305 wird das Ergebnissignal eingelesen, das die erkannte Kollisionsrichtung anzeigt. Das Ergebnissignal wird dabei unter Verwendung eines Ausführungsbeispiels des obenstehend beschriebenen Verfahrens zum Erkennen einer Kollisionsrichtung eines Fahrzeugs bestimmt. Im Schritt 310 wird unter Verwendung des Ergebnissignals das Steuersignal zum wahlweisen Ansteuern des ersten Kollisionsschutzmittels oder des zweiten Kollisionsschutzmittels bestimmt.

Gemäß dem hier gezeigten Ausführungsbeispiel umfasst das Verfahren 300 zudem einen Schritt 315 des Auswählens. Im Schritt 315 wird unter Verwendung eines dritten Beschleunigungssignals, das einen Betrag des ersten Beschleunigungssignals repräsentiert, das Untersystems mit dem ersten Kollisionsschutzmittel und dem zweiten Kollisionsschutzmittel ausgewählt. der Schritt 315 des Auswählens wird optional vor oder zeitgleich zu dem Schritt des Bestimmens ausgeführt.

Fig. 4 und 5 zeigen je ein Ausführungsbeispiel eines Fahrzeugs 100 mit spiegelsymmetrisch angeordnete Insassenpositionen 405, 406. Die anhand der vorhergehenden Figuren beschriebene Vorrichtung und Verfahren sind in Verbindung mit einem Fahrzeug wie dem in den Figuren 4 und 5 gezeigten Fahrzeug 100 verwendbar. Vorteilhafterweise wird dabei keine der beiden longitudinalen Kollisionsrichtungen bei einer Kollision bevorzugt. Als Fahrzeug 100 ist hier beispielhaft ein Robo-Taxi gezeigt. Alle Insassen sitzen in Blickrichtung zur Fahrzeugmitte, im Gegensatz zu konventionellen PKWs. In den vorliegenden beiden Figuren ist jeweils eine spiegelsymmetrische Anordnung von Sitzen in dem Fahrzeug 100 und somit von Insassenpositionen 405, 406 gezeigt. Die Sitze sind dabei einander gegenüberliegend angeordnet, wobei Insassen der jeweiligen Sitze der hier gezeigten Insassenpositionen 405, 406 sich gerade gegenübersitzen, mit Ausrichtung des Sitzes in Richtung Fahrzeugmitte. Entsprechend ist anders als bei Sitzpositionen in konventionellen Fahrzeugen, in denen alle Passagiere mit dem Gesicht zur Fahrtrichtung sitzen, ein Frontal-Crash, bei dem sich die Körper der Insassen aus den Sitzen vorverlagern können, kein kritischeres Szenario als ein Heck-Crash.

Dementsprechend können gemäß dem hier beschriebenen Ansatz Frontal-Crash und Heck-Crash gleich behandelt werden, beispielsweise unter Verwendung ein und desselben Auslösepfads. Es ist also nicht erforderlich, dass der Detektions- und Auslösealgorithmus für den Frontal-Crash eine komplexere Struktur besitzt und aufwendiger zu berechnen ist als für ein Fahrzeug mit konventionellen Sitzpositionen. Die Auslösealgorithmus für den Frontal-Crash und den Heck-Crash können dementsprechend gleich ausgeführt sein oder es kann nur ein Auslösealgorithmus verwendet werden, der sowohl für den Frontal-Crash als auch für den Heck-Crash zuständig ist. Daher besitzt der Algorithmus für Heck-Crash die gleiche Struktur wie der Front-Crash, da aufgrund der symmetrischen Sitzanordnung nicht sichergestellt ist, dass die Insassen bereits durch den Sitz an der Positionsverlagerung nach hinten gehindert werden. Das Auslösen weiterer Rückhaltemittel (z.B. Gurtstraffer) trägt daher stark zur Sicherheit des Insassen sowohl bei Heck-Crashes als auch bei Frontal-Crashes bei. Somit sind auch die Zeit-Anforderungen an den Algorithmus für Frontal-Crash und Heck-Crash identisch.

Da die Signalverarbeitung für die gleich zu behandelnden Crasharten sehr aufwändig gestaltet sein kann, z.B. hinsichtlich der Signalfilterung oder Signalintegration, ist es ressourcenschonend nur einen Algorithmen vorzusehen und berechnen zu lassen ("Entweder-Oder-Ansatz"), je nach Art des vorliegenden Crashes. Dies ist auch technisch akzeptabel, da die zentrale x-Beschleunigung die auf die Insassen einwirkende Kraft repräsentiert, welche je nach Crash-Richtung im Vorzeichen unterschiedlich ist.

Eine verbleibende Herausforderung des Entweder-Oder-Ansatzes ist im Falle von aufeinanderfolgenden Crashes (Kombi-Crashes) mit unterschiedlicher Richtung (d.h. zum Beispiel ein Frontal-Crash gefolgt von einem Heck-Crash, oder umgekehrt) das Ändern der Entscheidung, welche Richtung bei der Aktivierung von Schutzmittel zu berücksichtigen ist.

Aufgrund der durch die symmetrischen Sitzanordnung gleichen Verletzungsgefahr bei Frontal-Crashes und Heck-Crashes ist die "Umschalt Entscheidungsvorschrift" symmetrisch. Das heißt, dass das Umschalten der Berechnung des Algorithmus im Hinblick auf dem Frontal-Crash zugeordneten Berechnungen zu dem Heck-Crash zugeordneten Berechnungen soll genauso schnell erfolgen wie im umgekehrten Fall, also bei der gleichen Kombination aus Crashes, jedoch in unterschiedlicher Reihenfolge.

In der Automobilbranche werden aktuell Fahrzeuge wie das hier gezeigte Fahrzeug 100 entwickelt, sogenannte Robo-Taxis, die beispielsweise als autonom fahrende Fahrzeuge ausgeführt sind, in denen sich Insassen spiegelsymmetrisch gegenüber sitzen, wie bei den hier gezeigten Insassenpositionen 405, 406. Wenn sich zwei Insassen auf gegenüberliegen Sitzpositionen befinden, hier beide mit Blickrichtung zur Fahrzeugmitte, d.h. jeweils immer nur einer mit Blickrichtung zur aktuellen Fahrtrichtung, dann wird ein Crash an einem Fahrzeug-Ende von einem Insassen als Frontal-Crash wahrgenommen, bei dem der Insasse sich vorverlagert und vom anderen als Heck-Crash, bei dem er in den Sitz gedrückt wird. Aus diesem Grund erübrigt sich für solche Fahrzeuge die Notwendigkeit eines separaten Heckcrash-Algorithmus. In diesem Fall ist die Verwendung der obenstehend beschriebenen Vorrichtung und der obenstehend beschriebenen Verfahren vorteilhaft, zur gleichartigen Erkennung von Crashs an beiden Fahrzeugenden.

Für Fahrzeuge 100 mit spiegelsymmetrisch angeordneten Insassenpositionen 405, 406 und Rückhaltesystemen ist ein einheitlicher Crasherkennungsalgorithmus für Kollisionen an beiden Fahrzeugenden vorteilhaft, der von einer dynamischen Crashrichtungserkennung gesteuert wird, wie anhand der vorhergehenden Figuren beschrieben. Vorteilhafterweise ist dabei eine dynamische Crashrichtungserkennung möglich, bei der sowohl die aktuelle Crashrichtung erkannt wird, als auch eine "Umschalt-Entscheidungsvorschrift" für Kombi-Crashes bereitgestellt wird. Gemäß einem obenstehend beschriebenen Ausführungsbeispiel wird dies durch das Erkennen eines Wechsels der Kollisionsrichtung ermöglicht. Zudem wird bei dem Ansteuern und der Auswahl der Kollisionsschutzmittel keines der beiden Fahrzeugenden begünstigt, da durch die Insassenpositionen 405, 406 die Kollisionsrichtungen im Hinblick auf eine Vorverlagerung der Insassen gleichartig sind, sondern es wird symmetrisch ermittelt. Dies ist beispielsweise gegenüber einer separaten Berechnung zweier Frontcrash-Algorithmen (bei der jedes Fahrzeugende als "Front" betrachtet wird) im Hinblick auf Software-Ressourcen, die geschont werden können, vorteilhaft, da algorithmisch gleiche Verfahrensanweisungen (Source Code) auf dem Steuergerät nur einmal hinterlegt und gleiche Berechnungen nur einmal ausgeführt werden müssen. Dies erlaubt den Einsatz von Steuergeräten mit geringerer Rechenleistung und senkt die Kosten.

Im Gegensatz zu einer statischen Crashrichtungserkennung, die beispielsweise nur Kollisionen in Fahrtrichtung als relevant erkennt, oder die eine einmal erkannte Crashrichtung bis zum Ende der Kollision beibehält, ermöglicht eine dynamische Crashrichtungserkennung wie hier beschrieben eine vorteilhafte Detektion in komplexen Kombi-Crashes auch für Fahrzeuge mit symmetrischen Insassenpositionen 405, 406, z.B. in Robo-Taxis. Vorteilhaft ist dabei insbesondere das Erkennen des Wechsels der Kollisionsrichtung und das Berücksichtigen des erkannten Richtungswechsels beim Ansteuern von Kollisionsschutzmitteln wie obenstehend beschrieben. Gegenüber einer klassischen, asymmetrischen Umschalt-Entscheidungsvorschrift, bei der ein Wechsel von Richtung 1 nach Richtung 2 schneller erfolgt als von Richtung 2 nach Richtung 1 und sich somit eine geänderte Auslöseperformance bei Umkehr der Crashabfolge ergibt, ermöglicht die hier beschriebene dynamische Crashrichtungserkennung eine symmetrische und gleichberechtigte Behandlung von Crashes an beiden Fahrzeugenden auch in Kombi-Crashes.

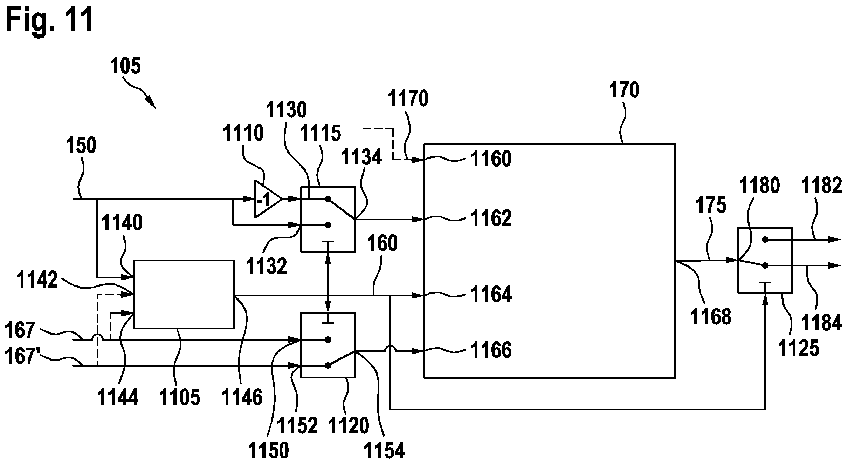

Die anhand von Figur 1 beschriebene Vorrichtung ist dazu ausgebildet, eine solche dynamische Crashrichtungserkennung auszuführen und anschließend auf Basis der erkannten Kollisionsrichtung Kollisionsschutzmittel anzusteuern. Wie nachfolgend anhand von Figur 11 gezeigt umfasst ein dem zugrunde liegender Algorithmus beziehungsweise eine dem zugrunde liegende Signalverarbeitung entsprechend die dynamische Crashrichtungserkennung sowie einen einheitlichen Crasherkennungsalgorithmus, der zur Bewertung für Crashes aus beiden Richtungen (longitudinal) eingesetzt wird. Basierend auf dem Ergebnis der Crashrichtungserkennung werden die Eingänge in den einheitlichen Crasherkennungsalgorithmus ausgewählt sowie die relevanten Rückhaltemittel für die jeweilige Richtung selektiert. Die gesamte Erkennung verhält sich dabei symmetrisch bezüglich der Crashrichtung. In Abgrenzung zu einem Crasherkennungs-Algorithmus, der nur eine statische Erkennung der Crashrichtung ermöglicht (d.h. ohne Änderung der Richtungsentscheidung), ermöglicht ein dynamischer Ansatz ein technisch besseres Verhalten in komplexen Unfallsituationen mit multiplen Crashes (Kombi-Crashes), insbesondere bei der gezeigten spiegelsymmetrischen Insassenpositionen 405, 406.

Weiterhin ermöglicht eine symmetrische Richtungsentscheidung inklusiver einer symmetrischen Umschalt-Entscheidungsvorschrift eine äquivalente Erkennungsperformanz für jede Crashrichtung in komplexen Unfallsituationen, z.B. bei zwei aufeinander folgenden Crashes an unterschiedlichen Fahrzeugenden.

Ein weiterer Vorteil ist das Einsparen von Software-Ressourcen, da benötigte Signale (z.B. Filter oder Integrale) für die Auslöseentscheidung von Rückhaltemittel mit einer vorgeschalteten Crashrichtungserkennung nur einmal berechnet werden, anders als bei voneinander unabhängigen Auslöse- und Crasherkennungsalgorithmen für jedes Fahrzeugende.

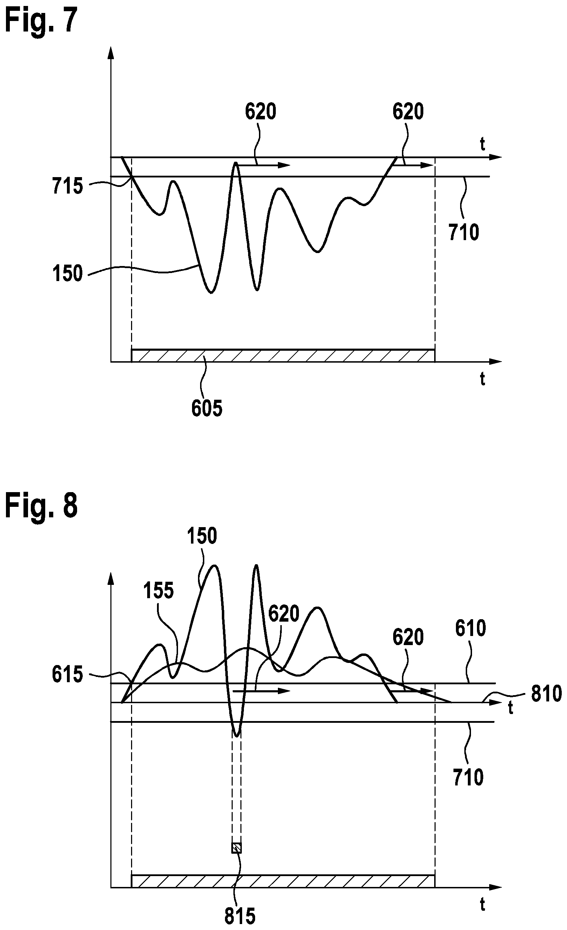

Fig. 6 zeigt eine Darstellung eines zeitlichen Verlaufs eines ersten Beschleunigungssignals 150 gemäß einem Ausführungsbeispiel. Der Verlauf des ersten Beschleunigungssignals 150 ist in einem Koordinatensystem gezeigt, in dem auf der Abszisse ein Zeitraum t und auf der Ordinate eine Größe einer longitudinalen Beschleunigung eines Fahrzeugs eingetragen ist. Das erste Beschleunigungssignal 150 zeigt hier eine Beschleunigung in einer ersten Richtung. Anhand von Fig. 7 ist nachfolgend eine longitudinale Beschleunigung des Fahrzeugs in einer zweiten Richtung gezeigt. Zudem ist ein Zeitraum 605 einer erkannten Kollision markiert. Ferner ist ein erster Schwellenwert 610 markiert, mit dem das erste Beschleunigungssignal 150 verglichen wird. Zu einem hier markierten Zeitpunkt 615 überschreitet ein Wert des ersten Beschleunigungssignals 150 den ersten Schwellenwert 610 erstmalig. Der Zeitpunkt 615 entspricht hier einem Zeitpunkt eines Beginns des Zeitraums 605 der erkannten Kollision.

Gemäß einem Ausführungsbeispiel weist das beim Vergleichen des ersten Beschleunigungssignals 150 mit dem ersten Schwellenwert 610 und dem zweiten Schwellenwert bestimmte erste Kollisionsrichtungssignal unabhängig von der Richtung der Kollision eine gleichartige Hysterese 620 auf. Die Hysterese 620 ist hier anhand von zwei Pfeilen als eine bestimmte Zeitdauer gezeigt, in der ein Unterschwinger des ersten Beschleunigungssignals 150 innerhalb des bestimmten Zeitraums der Hysterese 620 ohne Auswirkung auf die erkannte Kollisionsrichtung bleibt. Eine Zeitdauer der Hysterese 620 startet jeweils, wenn das erste Beschleunigungssignal 150 unter den ersten Schwellenwert 610 fällt. Wenn der Wert des Beschleunigungssignals 150 über den Zeitraum der Hysterese 620 hinaus unterhalb des ersten Schwellenwerts 610 bleibt, führt dies zu einem Wechsel der erkannten Kollisionsrichtung.

Im Folgenden wird die hier gezeigte Darstellung nochmal in anderen Worten erläutert: Die Kollisionsrichtungserkennung erfolgt symmetrisch in Bezug auf zwei Enden des Fahrzeugs. Die beiden Fahrzeugenden sind im Folgenden daher mit "Front1" und "Front2" bezeichnet. In der vorliegenden Figur ist eine notwendige Hauptbedingung für die Erkennung des Starts eines Crashes gezeigt: Wenn das erste Beschleunigungssignal 150 den ersten Schwellenwert 610, auch "DetectionThd_F1" genannt, überschreitet, ist das notwendige Kriterium für die Detektion des Crashstarts an der Front1 erfüllt. Entsprechend markiert der Zeitraum 605 der erkannten Kollision auch den Zeitraum, in dem die Hauptbedingung für Front1 erfüllt ist. Grundlage für die Erkennung ist dabei das erste Beschleunigungssignal 150, das ein verarbeitetes, beispielsweise Tiefpassgefiltertes Signal ist, das auf der zentralen x-Beschleunigung (d.h. entlang der Längsachse des Fahrzeugs), der longitudinalen Beschleunigung des Fahrzeugs basiert. Um die Robustheit der Detektion zu erhöhen, gilt diese Hauptbedingung nach erstmaliger Nichterfüllung weiterhin für eine bestimmte Zeit als "erfüllt", für den markierten Zeitraum der Hysterese 620. Dies verhindert die unnötige Segmentierung eines einzigen Crash-Events in mehrere Zeit-Segmente.

Zum Bestimmen des Kollisionsrichtungssignals wird das erste Beschleunigungssignal nicht nur mit dem ersten Schwellenwert 610 verglichen, sondern auch mit einem zweiten Schwellenwert. Dies ist nachfolgend anhand von Figur 7 gezeigt.

Fig. 7 zeigt eine Darstellung eines zeitlichen Verlaufs eines ersten Beschleunigungssignals 150 gemäß einem Ausführungsbeispiel. Der Verlauf des ersten Beschleunigungssignals 150 ist auch hier in einem Koordinatensystem gezeigt, in dem auf der Abszisse ein Zeitraum t und auf der Ordinate eine Größe einer longitudinalen Beschleunigung eines Fahrzeugs eingetragen ist. Im Gegensatz zu Figur 6 zeigt der Verlauf des ersten Beschleunigungssignals 150 hier eine Beschleunigung des Fahrzeugs in einer zweiten Richtung. Auch hier ist der Zeitraum 605 einer erkannten Kollision markiert. Zudem ist ein zweiter Schwellenwert 710 gezeigt, mit dem das erste Beschleunigungssignal zum Bestimmen des ersten Kollisionsrichtungssignals verglichen wird. Zu einem hier markierten Zeitpunkt 715 unterschreitet ein Wert des ersten Beschleunigungssignals 150 den zweiten Schwellenwert 710 erstmalig. Der Zeitpunkt 715 entspricht hier einem Zeitpunkt eines Beginns des Zeitraums 605 der erkannten Kollision.

Auch hier ist die Hysterese 620 durch zwei Pfeile markiert: ein Überschwinger des ersten Beschleunigungssignals 150 innerhalb des bestimmten Zeitraums der Hysterese 620 bleibt ohne Auswirkung auf den erkannten Kollisionsbeginn und die erkannte Kollisionsrichtung, ein Übersteigen des zweiten Schwellenwerts 710 über den Zeitraum der Hysterese 620 hinaus führt hingegen dazu, dass ein Ende der Kollision erkannt beziehungsweise ein Richtungswechsel der Kollisionsrichtung möglich ist.

Ein Erfassen eines Überschreiten des ersten Schwellenwerts und eines Unterschreiten des zweiten Schwellenwerts 710 durch das erste Beschleunigungssignal 150 ermöglicht dabei nicht nur ein Erkennen des Crashbeginns zum Zeitpunkt 715, wie in den beiden Figuren gezeigt, sondern auch ein Erkennen der Kollisionsrichtung. Die Hauptbedingung für die Crashrichtungs-Detektion ist dabei für Front1 ein Überschreiten der DetectionThd_F1, des ersten Schwellenwerts, und für Front2 ein Unterschreiten der DetectionThd_F2, des zweiten Schwellenwerts 710, durch das verarbeitete x-Beschleunigungssignal, das erste Beschleunigungssignal 150. Die Hauptbedingung gilt dabei durch die Hysterese 620 wie hier gezeigt nach erstmaliger Nichterfüllung für eine bestimmte Zeit weiterhin als erfüllt.

Zusammenfassend gesagt zeigen die Figuren 6 und 7 die notwendige Hauptbedingung für die Erkennung des Starts eines Crashes: Ein Überschreiten des Beschleunigungssignal 150 des ersten Schwellenwerts, der Schwelle DetectionThd_F1, wie anhand von Figur 6 gezeigt, oder analog gilt für Front 2 ein Unterschreiten (d.h. betragsmäßiges Überschreiten) der negativen Schwelle DetectionThd_F2, durch das erste Beschleunigungssignal 150.

Fig. 8 zeigt eine Darstellung eines zeitlichen Verlaufs eines ersten Beschleunigungssignals 150 und eines zweiten Beschleunigungssignals 155 gemäß einem Ausführungsbeispiel. Das erste Beschleunigungssignal 150 und das zweite Beschleunigungssignal sind in einem Koordinatensystem gezeigt, bei dem auf der Abszisse ein Zeitraum t und auf der Ordinate eine Größe einer longitudinalen Beschleunigung des Fahrzeugs in der ersten Richtung eingetragen ist, ähnlich wie in Figur 6.

Das erste Beschleunigungssignal 150 übersteigt hier mit Ausnahme eines kleinen Zeitraums, der innerhalb des Zeitraums der Hysterese 620 liegt, den ersten Schwellenwert 610. Das der Glättung unterzogene die Beschleunigung des Fahrzeugs repräsentierende zweite Beschleunigungssignal 155 übersteigt hier kontinuierlich einen weiteren Schwellenwert 810. Der weitere Schwellenwert 810 entspricht hier Null und ist daher durch die Abszisse markiert, er kann aber auch einen von Null verschiedenen Wert repräsentieren.

In einem hier markierten Zeitraum 815 unterschreitet das erste Beschleunigungssignal 150 nicht nur den ersten Schwellenwert 610, sondern auch den weiteren Schwellenwert 810 und den zweiten Schwellenwert 710. Durch das Unterschreiten des zweiten Schwellenwerts 710 ist im Zeitraum 815 kurzzeitig die Hauptbedingung für eine erkannte Kollision an Front2 erfüllt. Nicht erfüllt ist jedoch die Nebenbedingung: die Richtung der Kollision, die durch das im Vergleich des ersten Beschleunigungssignals 150 mit dem ersten Schwellenwert 610 und dem zweiten Schwellenwert 710 bestimmte Kollisionsrichtungssignal angezeigt wird, gilt nur dann als die tatsächliche Kollisionsrichtung, wenn sie mit der durch das im Vergleich des zweiten Beschleunigungssignals 155 mit dem weiteren Schwellenwert 810 bestimmten Richtung der Kollision übereinstimmt. Dies ist hier nicht gegeben, da das zweite Beschleunigungssignal 155 den weiteren Schwellenwert im Zeitraum 815 nicht unterschreitet, sondern übersteigt. Entsprechend findet hier durch das kurzzeitige Unterschwingen des ersten Beschleunigungssignals 150 unter den zweiten Schwellenwert 710 keine Fehlinterpretation statt, es wird kein Wechsel der Kollisionsrichtung erkannt.

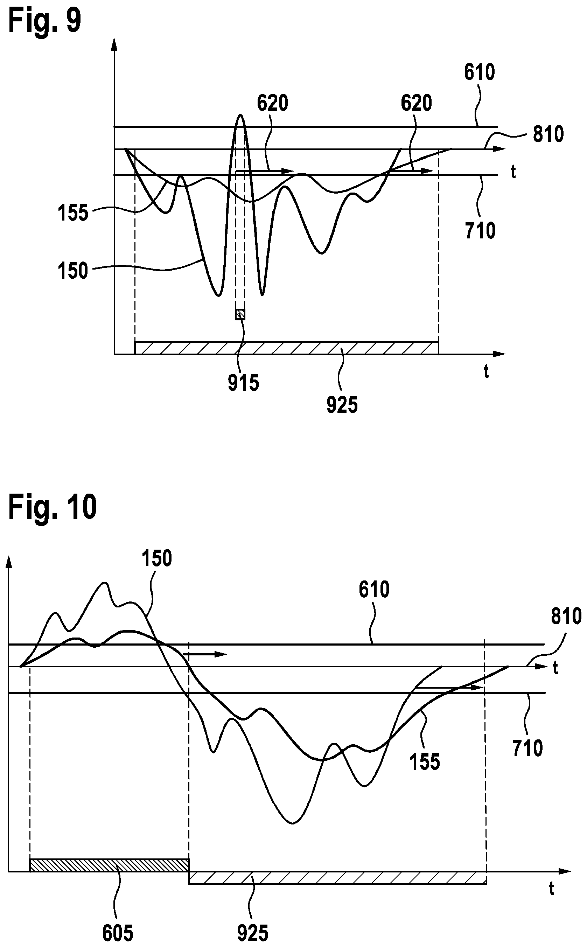

Anders ausgedrückt: Es ist eine Nebenbedingung erforderlich, um das Problem der Deutungsambivalenz bei starken Oszillationen im gemessenen Beschleunigungssignal zu lösen: In der vorliegenden Figur sowie in der folgenden Figur 9 ist beispielhaft gezeigt, wie die verarbeitete zentrale x-Beschleunigung, das erste Beschleunigungssignal 150, während eines Crashes an einem Fahrzeugende (z.B. Front1) die Schwellenbedingung für das gegenüberliegende Fahrzeugende (z.B. Front2) kurzzeitig erfüllt. Entsprechend reicht die mittels des Vergleichs des ersten Beschleunigungssignals 150 mit dem ersten Schwellenwert 610 und dem zweiten Schwellenwert 710 bestimmte Richtung der Kollision alleine nicht aus, um die tatsächliche Kollisionsrichtung zu bestimmen. Nur wenn Haupt- und Nebenbedingung für die Starterkennung einer Kollision für Front 1 und Front2 erfüllt sind, erfolgt die Crashstarterkennung und die Crashrichtungserkennung.

In Situationen, in denen beide Hauptbedingungen erfüllt sind, in denen also das erste Beschleunigungssignal 150 sowohl den ersten Schwellenwert 610 überschreitet als auch den zweiten Schwellenwert 710 unterschreitet, ist die Erfüllung der Nebenbedingung für die Erkennung der tatsächlichen Crashrichtung entscheidend: Dafür ist das zweite Beschleunigungssignal 155 zu berücksichtigen, das auch auf der zentralen x-Beschleunigung basiert, aber so verarbeitet wurde, dass es eine stärkere Tiefpass-Charakteristik als das erste Beschleunigungssignal 150 aufweist. Das zweite Beschleunigungssignal 155 wird nur für die Erfüllung der Nebenbedingung verwendet, da eine starke Tiefpass-Charakteristik möglicherweise auch mit einer Signal-Verzögerung einhergeht. Die Nebenbedingung gilt im einfachsten Fall für eine Crashrichtung als erfüllt, wenn das Vorzeichen des zweiten Beschleunigungssignals 155 (x-Beschleunigung mit starker Tiefpass-Charakteristik) zum Vorzeichen des Schwellenwerts 610, 710 (DetectionThd_F1 oder DetectionThd_F2) der Hauptbedingung, dem Vergleich mit dem ersten Beschleunigungssignal 150 passt. Als Nebenbedingung bei einer Deutungsambivalenz im Falle stark oszillierender Signale ist somit die Übereinstimmung der durch den Vergleich des ersten Beschleunigungssignals 150 mit dem ersten Schwellenwert 610 und dem zweiten Schwellenwert 710 bestimmte Richtung der Kollision mit der durch den Vergleich des zweiten Beschleunigungssignals 155 mit dem weiteren Schwellenwert 810 vorteilhaft für eine robuste und dynamische Erkennung der tatsächlichen Kollisionsrichtung. Abschließend gilt somit ein Crash an demjenigen Fahrzeugende (Front1 / Front2) als detektiert, dessen Haupt- und Nebenbedingung gleichzeitig erfüllt ist.

In komplexen Kombi-Crashsituationen, in denen ein Front 1-Crash direkt in einen Front 2-Crash oder umgekehrt) übergeht, wird auch die Nebenbedingung innerhalb kurzer Zeit von Front 1 auf Front 2 wechseln. Dies ermöglicht ein dynamisches Umschalten von der Crashrichtung Front 1 auf Front 2 bzw. von Front 2 auf Front 1 in solchen Crashszenarien.

Fig. 9 zeigt eine Darstellung eines zeitlichen Verlaufs eines ersten Beschleunigungssignals 150 und eines zweiten Beschleunigungssignals 155 gemäß einem Ausführungsbeispiel. Das erste Beschleunigungssignal 150 und das zweite Beschleunigungssignal sind in einem Koordinatensystem gezeigt, bei dem auf der Abszisse ein Zeitraum t und auf der Ordinate eine Größe einer longitudinalen Beschleunigung des Fahrzeugs in der zweiten Richtung eingetragen ist, ähnlich wie in Figur 7. Gezeigt ist eine vergleichbare Situation wie die anhand von Fig. 8 beschriebenen Situation: Das erste Beschleunigungssignal 150 unterschreitet hier mit Ausnahme eines kleinen Zeitraums 915, der innerhalb des Zeitraums der Hysterese 620 liegt, den ersten Schwellenwert 610 und den zweiten Schwellenwert 710. Das zweite Beschleunigungssignal 155 unterschreitet hier kontinuierlich den weiteren Schwellenwert 810, der auch hier durch die Abszisse markiert ist. Entsprechend wird hier durch den Vergleich des ersten Beschleunigungssignals 150 mit dem ersten Schwellenwert 610 und dem zweiten Schwellenwert 710 mit Ausnahme des Zeitraum 915, in dem das erste Beschleunigungssignal kurzzeitig den zweiten Schwellenwert 710 und den ersten Schwellenwert 610 übersteigt, die Kollision in der zweiten Richtung erkannt. Das zweite Beschleunigungssignal 155 unterschreitet auch hier kontinuierlich den weiteren Schwellenwert 810, wodurch die Nebenbedingung über einen gesamten Zeitraum 925 der erkannten Kollision in der zweiten Richtung erfüllt ist. Entsprechend ist auch hier gezeigt, dass für die zuverlässige Erkennung einer Kollision für Front 1 und Front2 und für die Erkennung der Crashrichtung die Erfüllung sowohl der Hauptbedingung als auch der Nebenbedingung vorteilhaft ist.

Fig. 10 zeigt eine Darstellung eines zeitlichen Verlaufs eines ersten Beschleunigungssignals 150 und eines zweiten Beschleunigungssignals 155 bei einem Wechsel der Kollisionsrichtung gemäß einem Ausführungsbeispiel. In dem Zeitraum 605, in dem das zweite Beschleunigungssignal 155 den weiteren Schwellenwert 810 kontinuierlich übersteigt, und in dem das erste Beschleunigungssignal 150 den ersten Schwellenwert 610 mit einem kurzen Zeitraum der Hysterese 620 kurz vor den Wechsel der Kollisionsrichtung kontinuierlich übersteigt, wird die erste Richtung der Beschleunigung als die tatsächliche Kollisionsrichtung erkannt. Dann erfolgt der Wechsel der Kollisionsrichtung, der hier durch das Ende des Zeitraums 605 der erkannten ersten Kollisionsrichtung und den Beginn des Zeitraums 925 der erkannten zweiten Kollisionsrichtung markiert wird. Nach dem Wechsel der Kollisionsrichtung, im Zeitraum 925 der erkannten zweiten Kollisionsrichtung unterschreitet das zweite Beschleunigungssignal 155 entsprechend kontinuierlich den weiteren Schwellenwert 810und das erste Beschleunigungssignal 155 unterschreitet den zweiten Schwellenwert 710 kontinuierlich, mit Ausnahme des Zeitraums der Hysterese 620 zum Ende des Zeitraums 925 der erkannten Kollision in der zweiten Richtung hin.

Entsprechend ist in der hier vorliegenden Figur ein Umschalten der Crashrichtungserkennung von Front 1 auf Front 2 in einem Kombi-Crash gezeigt. In dem hier gezeigten Beispiel ist eine Variante gezeigt, in der die Nebenbedingung nur erfüllt sein muss, sofern die Hauptbedingung für Front1 und Front2 gleichzeitig erfüllt ist (Deutungsambivalenz). Die Nebenbedingung ist in dieser Variante erfüllt, sofern das Vorzeichen der Tiefpass-gefilterten x-Beschleunigung, des zweiten Beschleunigungssignals 155, mit dem der verarbeiteten x-Beschleunigung, des ersten Beschleunigungssignals 150, übereinstimmt.

Alternativ dazu ist es auch möglich, die Nebenbedingung für die letztendliche Crashrichtungs-Entscheidung nur zu verwenden, falls die Hauptbedingung sowohl für Front1 als auch für Front2 erfüllt ist. Wenn dies nicht der Fall ist, gilt dann die Hauptbedingung als ausreichend um über die Crashrichtung zu entscheiden. Für den weiteren Schwellenwert 810 und damit für die Nebenbedingung ist es auch möglich, von Null verschiedene Schwellwerte zu verwenden. Zudem ist es auch möglich, zusätzlich oder alternativ zu dem Vergleich des zweiten Beschleunigungssignals 155 mit dem weiteren Schwellenwert 810 auch auf Sensorsignale von peripheren Sensoren gebildete Merkmale als Nebenbedingung zu verwenden. Es ist beispielsweise möglich, Merkmale der der Crashrichtung "Front1" zugeordneten Upfrontsensoren mit solchen der Crashrichtung "Front2" zugeordneten Upfrontsensoren zu vergleichen, z.B. durch Differenzbildung. Dieses verarbeitete Differenzsignal zeigt positive Werte im Front 1 Crash und negative Werte im Front 2 Crash und stellt dann die Nebenbedingung für die Richtungsentscheidung dar. Zudem ist anstelle einer logischen Verknüpfung von Nebenbedingung und Hauptbedingung auch eine von der Nebenbedingung gesteuerte adaptive Hauptbedingung möglich, d.h. dass es möglich ist, den ersten Schwellenwert 610, DetectionThd_F1, und den zweiten Schwellenwert 710, DetectionThd_F2, in ihrem Wert dynamisch zu beeinflussen. Zeigt beispielsweise das als Nebenbedingung verwendete weitere (stark tiefpassgefilterte) x-Signal, das zweite Beschleunigungssignal 155, in Front1-Richtung, so kann die Startschwelle für Front2-Crashes (DetectionThd_F2), der zweite Schwellenwert 710, betragsmäßig erhöht werden und damit den Start in Front2-Richtung erschweren. Wegen der negativen Vorzeichen von Front2 Kollisionen entspricht die betragsmäßige Erhöhung einer stärkeren Absenkung der Schwelle DetectionThd_F2 in den negativen Bereich. Es ist auch möglich, diese betragsmäßige Erhöhung kontinuierlich als Funktion des Wertes des zweiten Beschleunigungssignals 155 auszugestalten. Völlig analog lassen sich die Schwellenhöhen der Hauptdetektionsschwellen, dem ersten Schwellenwert 610 DetectionThd_F1 und dem zweiten Schwellenwert 710 DetectionThd_F2, auch als Funktion des obenstehend beschriebenen Upfront-Differenzsignals anpassen.

Fig. 11 zeigt ein Blockschaltbild einer Vorrichtung 105 gemäß einem Ausführungsbeispiel. Die hier gezeigten Signale und Komponenten der Vorrichtung 105 ähneln oder entsprechen den anhand vorheriger Figuren beschriebenen Ausführungen. In der vorliegenden Figur ist ein Zusammenspiel der Crashrichtungserkennung und des einheitlichen Crasherkennungsalgorithmus gezeigt, anhand einer beispielhaften Signalverarbeitung zum Erkennen der Kollisionsrichtung. Dabei ist zentral, dass ein einheitlicher Crasherkennungsalgorithmus für beide Crashrichtungen Front1 und Front2 verwendet wird. Lediglich in der Auswahl der Eingangssignale dieses Algorithmus sowie in der Selektion der passenden Rückhaltemittel werden Differenzierungen in Bezug auf die erkannte Crashrichtung vorgenommen.

Die Vorrichtung 105 umfasst hier beispielhaft eine Erkennungseinrichtung 1105, die die anhand von Figur 1 beschriebene erste Vergleichseinrichtung 135, zweite Vergleichseinrichtung 140 und Bestimmungseinrichtung 145 zum Bestimmen des Ergebnissignals 160 umfasst und entsprechend das Ergebnissignal 160 bereitstellt. Gemäß dem hier gezeigten Ausführungsbeispiel wird das Ergebnissignal 160 über eine einzige elektrische Leitung bereitgestellt. Zudem umfasst die Vorrichtung 105 einen Inverter 1110, einen ersten Schalter 1115, einen zweiten Schalter 1120, die anhand von Figur 1 beschriebene Bestimmungseinrichtung 170 zum Bestimmen des Steuersignals 175 und einen dritten Schalter 1125.

Der erste Schalter 1115 weist einen ersten Eingang 1130, einen zweiten Eingang 1132 und einen Ausgang 1134 auf. Das erste Beschleunigungssignal 150 liegt über den Inverter 1110 an dem ersten Eingang 1130 des ersten Schalters 1115 und unter Umgehung des Inverters 1110 direkt an dem zweiten Eingang 1132 an. Unter Verwendung des von der Erkennungseinrichtung 1105 bereitgestellten Ergebnissignals 160 schaltet der Steueranschluss des ersten Schalters 1115 den ersten Eingang 1130 oder den zweiten Eingang 1132 auf den Ausgang 1134. Wenn das Ergebnissignal 160 anzeigt, dass das erste Beschleunigungssignal 150 ein positives Vorzeichen aufweist, ist der zweite Eingang 1132 auf den Ausgang gestellt, und wenn das erste Beschleunigungssignal 150 ein negatives Vorzeichen aufweist, ist der erste Eingang 1130 auf den Ausgang gestellt, wie hier beispielhaft gezeigt.

Die Erkennungseinrichtung 1105 weist hier einen ersten Eingang 1140, einen zweiten Eingang 1142, einen dritten Eingang 1144 und einen Ausgang 1146 auf. Das erste Beschleunigungssignal 150 liegt über den ersten Eingang 1140 an der Erkennungseinrichtung 1105 an. Über den zweiten Eingang 1142 liegt das Sensorsignal 167, das beispielsweise von einem peripheren Beschleunigungssensor für Front 1 bereitgestellt wird, an der Erkennungseinrichtung 1105 an, und über den dritten Eingang 1144 liegt ein weiteres Sensorsignal 167, das beispielsweise von einem peripheren Beschleunigungssensor für Front 2 bereitgestellt wird, an der Erkennungseinrichtung 1105 an. Unter Verwendung der Eingangssignale 150, 167, 167' wird von der Erkennungseinrichtung 1105 die Bestimmung des Ergebnissignals 160 durchgeführt, und das Ergebnissignals 160 wird über den Ausgang 1146 bereitgestellt.

Der zweite Schalter 1120 weist einen ersten Eingang 1150, einen zweiten Eingang 1152 und einen Ausgang 1154 auf. Das Sensorsignal 167 liegt an dem ersten Eingang 1150 an, und das weitere Sensorsignal 167' liegt an dem zweiten Eingang 1152 an. Unter Verwendung des Ergebnissignals 160 schaltet der Steueranschluss des zweiten Schalters 1120 den ersten Eingang 1150 oder den zweiten Eingang 1152 auf den Ausgang 1154. Wenn das Ergebnissignal 160 eine erkannte Kollision an Front 1 anzeigt, ist der erste Eingang 1150 auf den Ausgang 1154 geschaltet, und wenn das Ergebnissignal 160 eine erkannte Kollision an Front 2 anzeigt, ist der zweite Eingang 1152 auf den Ausgang 1154 geschaltet, wie hier beispielhaft gezeigt.

Die Bestimmungseinrichtung 170 zum Bestimmen des Steuersignals 175 weist hier beispielhaft einen ersten Eingang 1160, einen zweiten Eingang 1162, einen dritten Eingang 1164, einen vierten Eingang 1166 und einen Ausgang 1168 auf. Über den ersten Eingang 1160 liegt ein Fahrzeugsensorsignal 1170 an der Bestimmungseinrichtung 170 an. Das Fahrzeugsensorsignal 1170 wird beispielsweise von einer Radarsensoreinrichtung oder einer Drucksensoreinrichtung bereitgestellt. Über den zweiten Eingang 1162 liegt das Ausgangssignal des ersten Schalters 1115, das erste Beschleunigungssignal 150, das hier beispielhaft eine positive longitudinale Beschleunigung anzeigt, an der Bestimmungseinrichtung 170 an. Über den dritten Eingang 1164 liegt das Ausgangssignal der Erkennungseinrichtung 1105, das Ergebnissignal 160 mit der Crashrichtungsinformation, an der Bestimmungseinrichtung 170 an, und über den vierten Eingang 1166 liegt das Ausgangssignal des zweiten Schalters 1120, das von peripheren Beschleunigungssensoren erfasste weitere Sensorsignal 167' an der Bestimmungseinrichtung 170 an. Das von der Bestimmungseinrichtung 170 über den Ausgang 1168 bereitgestellte Steuersignal 175 wird unter Verwendung der genannten Eingangssignale 1170, 150, 160, 167 bestimmt. Das Bestimmen des Steuersignals 175 erfolgt gemäß einer Bestimmungsvorschrift, beispielsweise dem obenstehend beschriebenen "Frontcrash-Algorithmus", der für Front 1 und Front 2 des Fahrzeugs gleichartig ist. Das Steuersignal 175 wird zum Bereitstellen von Zündbefehlen für Rückhaltemittel (generisch) bestimmt, und über den Ausgang 1168 an den dritten Schalter 1125 bereitgestellt.

Der dritte Schalter 1125 weist einen Eingang 1180 sowie einen ersten Ausgang 1182 und einen zweiten Ausgang 1184 auf. Über den Eingang 1180 liegt das Steuersignal 175 an dem dritten Schalter 1125 an.

Unter Verwendung des Ergebnissignals 160 schaltet der Steueranschluss des dritten Schalters 1125 den Eingang 1180 auf den ersten Ausgang 1182, um das Steuersignal 175 zum Ausgeben von Zündbefehlen für Front 1 Rückhaltemittelt auszugeben, oder wie hier beispielhaft gezeigt auf den zweiten Ausgang 1184, um das Steuersignal 175 zum Ausgeben von Zündbefehlen für Front 2 Rückhaltemittelt auszugeben.

Im Folgenden wird eine beispielhafte Anwendung nochmals in anderen Worten erläutert: Zunächst erfolgt eine Selektion der passenden Eingangssignale für den einheitlichen Crasherkennungsalgorithmus. Zentral im Fahrzeug angebrachte Sensoren werden vom Crasherkennungsalgorithmus sowohl in Front 1- als auch in Front 2-Crashes ausgewertet. Hierzu wird eine Signalnormierung der Sensorsignale auf die erkannte Crashrichtung vorgenommen. Dies gilt insbesondere für das x-Signal im zentral angebrachten Airbagsteuergerät, aber auch für andere symmetrisch in Bezug auf die Fahrzeuglängsrichtung angebrachte in longitudinaler Richtung messender Sensoren, z.B. an der B-Säule.

Dagegen sind von asymmetrisch in (Bezug auf die Fahrzeuglängsrichtung) angebrachten Sensoren, z.B. den an den jeweiligen Enden des Fahrzeugs angebrachten Upfrontsensoren, nur diejenigen relevant, die in der passenden Crashrichtung liegen. Daher erfolgt in diesem Fall eine Auswahl der passenden Upfrontsensoren basierend auf der erkannten Crashrichtung.

Für die Ansteuerung der passenden Rückhaltemittel werden die Zündentscheidungen des Crasherkennungsalgorithmus gegebenenfalls nochmals mit der Crashrichtungserkennung kombiniert, so dass nur die der Richtung Front1 bzw. Front2 zugeordneten Rückhaltemittel aktiviert werden. Beispielsweise soll die Zündentscheidung "Airbag" nur zur Zündung der Airbags für die in Crashrichtung orientierten, d.h. blickenden, Passagiere führen. Dagegen wird die Zündentscheidung "Gurtstraffer" vorteilhafterweise für die Zündung aller Gurtstraffer verwendet werden, um damit auch eine Fixierung der gegen die Crashrichtung sitzenden Passagiere zu erreichen.

Je nach Ausgestaltung des Crasherkennungsalgorithmus ist es darüber hinaus notwendig, gewisse interne Größen und Gedächtniselemente des Algorithmus zu resetieren, wenn ein Wechsel der Crashrichtung vorliegt. Aus diesem Grund stellt die Crashrichtungserkennung beispielsweise auch einen Eingang in den Crasherkennungsalgorithmus dar, wie anhand der vorliegenden Figur gezeigt.

## Patentansprüche

1. Verfahren (200) zum Erkennen einer Kollisionsrichtung eines Fahrzeugs (100), wobei das Verfahren (200) folgende Schritte umfasst:
Einlesens eines ersten Beschleunigungssignals (150) über eine Schnittstelle (165) zu einem Beschleunigungssensor (130), wobei das erste Beschleunigungssignal (150) eine longitudinale Beschleunigung des Fahrzeugs (100) repräsentiert;
Vergleichen (205) des ersten Beschleunigungssignals (150) mit einem ersten Schwellenwert (610) und einem zweiten Schwellenwert (710), um ein eine Richtung der Kollision anzeigendes erstes Kollisionsrichtungssignal (152) zu bestimmen, wobei der erste Schwellenwert (610) und der zweite Schwellenwert (710) unterschiedliche Vorzeichen aufweisen, um zwischen zwei entgegengesetzten Richtungen der Kollision unterscheiden zu können;
Vergleichen (210) eines zweiten Beschleunigungssignals (155) mit einem weiteren Schwellenwert (810), um ein weiteres eine Richtung der Kollision anzeigendes Kollisionsrichtungssignal (157) zu bestimmen, wobei das zweite Beschleunigungssignal (155) die einer Glättung unterzogene Beschleunigung des Fahrzeugs (100) repräsentiert;
Bestimmen (215) eines Ergebnissignals (160) unter Verwendung des ersten Kollisionsrichtungssignals (152) und des weiteren Kollisionsrichtungssignals (157), wobei das Ergebnissignal (160) die von dem ersten Kollisionsrichtungssignal (152) und dem weiteren Kollisionsrichtungssignal (157) angezeigte Richtung als eine tatsächliche Kollisionsrichtung anzeigt, wenn die Richtung der Kollision des ersten Kollisionsrichtungssignals (152) und die Richtung der Kollision des weiteren Kollisionsrichtungssignals (157) übereinstimmen, wobei im Schritt (205) des Vergleichens des ersten Beschleunigungssignals (150) das erste Kollisionsrichtungssignal (152) unabhängig von der Richtung der Kollision eine gleichartige Hysterese (620) aufweist.

2. Verfahren (200) gemäß Anspruch 1, mit einem Schritt (220) des Bereitstellens des Ergebnissignals (160) über eine einzige elektrische Leitung.

3. Verfahren (200) gemäß einem der vorangegangenen Ansprüche, mit einem wiederholten Ausführen der Schritte des Verfahrens (200), um einen Wechsel der tatsächlichen Kollisionsrichtung während der Kollision zu erkennen, und unter Verwendung des Ergebnissignals (160) anzuzeigen.

4. Verfahren (200) gemäß Anspruch 1, wobei im Schritt (225) des Einlesens zusätzlich das zweite Beschleunigungssignal (155) eingelesen wird, oder mit einem Schritt (230) des Glättens des ersten Beschleunigungssignals (150) unter Verwendung einer Tiefpass-Filterung, um das zweite Beschleunigungssignal (155) zu ermitteln.

5. Verfahren (200) gemäß Anspruch 1, wobei im Schritt (205) des Vergleichens des ersten Beschleunigungssignals (150) eine Zeitdauer der Hysterese (620) gestartet wird, wenn das erste Beschleunigungssignal (150) betragsmäßig unter den ersten Schwellenwert (610) oder den zweiten Schwellenwert (710) fällt und nicht gestartet wird, wenn das erste Beschleunigungssignal (150) betragsmäßig über den ersten Schwellenwert (610) oder den zweiten Schwellenwert (710) steigt.

6. Verfahren (200) gemäß einem der vorangegangenen Ansprüche, wobei im Schritt (215) des Bestimmens das Ergebnissignal (160) zusätzlich unter Verwendung zumindest einen Sensorsignals (167; 167') bestimmt wird, wobei das Sensorsignal (167; 167') ein von einem peripheren Sensor (131) des Fahrzeugs (100) bereitgestelltes Signal repräsentiert.

7. Verfahren (200) gemäß einem der vorangegangenen Ansprüche, wobei im Schritt (205) des Vergleichens des ersten Beschleunigungssignals (150) mit dem ersten Schwellenwert (610) und dem zweiten Schwellenwert (710) ferner ein Kollisionsstartsignal (169) bestimmt wird, das eine erkannte Kollision repräsentiert.

8. Verfahren (300) zum Ansteuern eines Kollisionsschutzsystems (110) eines Fahrzeugs (100) bei einer erkannten Kollisionsrichtung des Fahrzeugs (100), wobei das Kollisionsschutzsystem (110) zumindest ein Untersystem (115, 116) mit zumindest einem ersten einer ersten Kollisionsrichtung zugeordneten Kollisionsschutzmittel (120, 121) und zumindest einem zweiten einer zweiten Kollisionsrichtung zugeordneten Kollisionsschutzmittel (125, 126) umfasst, wobei das Verfahren (300) folgende Schritte aufweist:
Einlesen (305) eines Ergebnissignals (160), das die erkannte Kollisionsrichtung anzeigt, wobei das Ergebnissignal (160) in einem Verfahren (200) zum Erkennen einer Kollisionsrichtung eines Fahrzeugs (100) gemäß einem der Schritte 1 bis 7 bestimmt wird; und
Bestimmen (310) eines Steuersignals (175) zum wahlweisen Ansteuern des ersten Kollisionsschutzmittels (120, 121) oder des zweiten Kollisionsschutzmittels (125, 126), wobei das Steuersignal (175) unter Verwendung des Ergebnissignals (160) bestimmt wird.

9. Verfahren (300) gemäß Anspruch 8, wobei im Schritt (310) des Bestimmens das Steuersignal (175) zum Ansteuern des ersten Kollisionsschutzmittels (120, 121) bestimmt wird, wenn das Ergebnissignal (160) die erste Kollisionsrichtung anzeigt, und zum Ansteuern des zweiten Kollisionsschutzmittels (125, 126), wenn das Ergebnissignal (160) die zweite Kollisionsrichtung anzeigt.

10. Verfahren (300) gemäß Anspruch 8 oder 9, mit einem Schritt (315) des Auswählens des Untersystems (115, 116) mit dem ersten Kollisionsschutzmittel (120, 121) und dem zweiten Kollisionsschutzmittel (125, 126) unter Verwendung eines dritten Beschleunigungssignals (182), das einen Betrag des ersten Beschleunigungssignals (150) repräsentiert, wobei der Schritt (315) des Auswählens vor oder zeitgleich zu dem Schritt des Bestimmens ausgeführt wird.

11. Vorrichtung (105) mit einer Recheneinheit, einer Speichereinheit und einer Schnittstelle, die eingerichtet ist, um die Schritte des Verfahrens (200) gemäß einem der Ansprüche 1 bis 7 und die Schritte des Verfahrens (300) gemäß einem der Ansprüche 8 bis 10 in entsprechenden Einheiten (135, 140, 145, 170, 172, 180; 1105) auszuführen und/oder anzusteuern.

12. Fahrzeug (100) mit einer Vorrichtung (105) gemäß Anspruch 11, wobei das Fahrzeug (100) zumindest zwei spiegelsymmetrisch angeordnete Insassenpositionen (405, 406) aufweist und wobei das erste Kollisionsschutzmittel (120, 121) und das zweite Kollisionsschutzmittel (125, 126) spiegelsymmetrisch angeordnet sind.

13. Computerprogramm mit Anweisungen, die, wenn das Programm durch die Vorrichtung nach Anspruch 11 ausgeführt wird, bewirken, dass die Schritte des Verfahrens (200) gemäß einem der Ansprüche 1 bis 7 und die Schritte des Verfahrens (300) gemäß einem der Ansprüche 8 bis 10 ausgeführt und/oder angesteuert werden.

## Claims

1. Method (200) for detecting a collision direction of a vehicle (100), wherein the method (200) comprises the following steps:
reading in a first acceleration signal (150) via an interface (165) to an acceleration sensor (130), wherein the first acceleration signal (150) represents a longitudinal acceleration of the vehicle (100);
comparing (205) the first acceleration signal (150) with a first threshold value (610) and a second threshold value (710) in order to determine a first collision direction signal (152) indicating a direction of the collision, wherein the first threshold value (610) and the second threshold value (710) have different signs in order to be able to distinguish between two opposite directions of the collision;
comparing (210) a second acceleration signal (155) with a further threshold value (810) in order to determine a further collision direction signal (157) indicating a direction of the collision, wherein the second acceleration signal (155) represents the acceleration of the vehicle (100) subjected to smoothing; determining (215) a result signal (160) using the first collision direction signal (152) and the further collision direction signal (157), wherein the result signal (160) indicates the direction indicated by the first collision direction signal (152) and the further collision direction signal (157) as an actual collision direction if the direction of the collision of the first collision direction signal (152) and the direction of the collision of the further collision direction signal (157) correspond,
wherein, in the step (205) of comparing the first acceleration signal (150), the first collision direction signal (152) has a similar hysteresis (620) irrespective of the direction of the collision.

2. Method (200) according to Claim 1, having a step (220) of providing the result signal (160) via a single electrical line.

3. Method (200) according to one of the preceding claims, with repeated execution of the steps of the method (200) in order to detect a change in the actual collision direction during the collision, and to indicate it using the result signal (160).

4. Method (200) according to Claim 1, wherein, in the reading-in step (225), the second acceleration signal (155) is additionally read in, or with a step (230) of smoothing the first acceleration signal (150) using low-pass filtering in order to determine the second acceleration signal (155).

5. Method (200) according to Claim 1, wherein, in the step (205) of comparing the first acceleration signal (150), a time period of the hysteresis (620) is started when the absolute value of the first acceleration signal (150) falls below the first threshold value (610) or the second threshold value (710) and is not started when the absolute value of the first acceleration signal (150) exceeds the first threshold value (610) or the second threshold value (710).

6. Method (200) according to one of the preceding claims, wherein in the determining step (215), the result signal (160) is additionally determined using at least one sensor signal (167; 167'), wherein the sensor signal (167; 167') represents a signal provided by a peripheral sensor (131) of the vehicle (100).

7. Method (200) according to one of the preceding claims, wherein, in the step (205) of comparing the first acceleration signal (150) with the first threshold value (610) and the second threshold value (710), a collision start signal (169) representing a detected collision is also determined.

8. Method (300) for controlling a collision protection system (110) of a vehicle (100) when a collision direction of the vehicle (100) is detected, wherein the collision protection system (110) comprises at least one subsystem (115, 116) having at least one first collision protection means (120, 121) assigned to a first collision direction and at least one second collision protection means (125, 126) assigned to a second collision direction, where the method (300) has the following steps:
reading in (305) a result signal (160) indicating the detected collision direction, wherein the result signal (160) is determined in a method (200) for detecting a collision direction of a vehicle (100) according to one of steps 1 to 7; and
determining (310) a control signal (175) for controlling either the first collision protection means (120, 121) or the second collision protection means (125, 126), wherein the control signal (175) is determined using the result signal (160).

9. Method (300) according to Claim 8, wherein, in the determining step (310), the control signal (175) for controlling the first collision protection means (120, 121) is determined when the result signal (160) indicates the first collision direction, and for controlling the second collision protection means (125, 126) when the result signal (160) indicates the second collision direction.

10. Method (300) according to Claim 8 or 9, having a step (315) of selecting the subsystem (115, 116) with the first collision protection means (120, 121) and the second collision protection means (125, 126) using a third acceleration signal (182) representing an absolute value of the first acceleration signal (150), wherein the selecting step (315) is performed before or at the same time as the determining step.

11. Apparatus (105) having a computing unit, a memory unit and an interface, which is configured to carry out and/or control the steps of the method (200) according to one of Claims 1 to 7 and the steps of the method (300) according to one of Claims 8 to 10 in corresponding units (135, 140, 145, 170, 172, 180; 1105).

12. Vehicle (100) having an apparatus (105) according to Claim 11, wherein the vehicle (100) has at least two mirror-symmetrically arranged occupant positions (405, 406), and wherein the first collision protection means (120, 121) and the second collision protection means (125, 126) are arranged mirror-symmetrically.

13. Computer program having instructions which, when the program is executed by the apparatus according to Claim 11, cause the steps of the method (200) according to one of Claims 1 to 7 and the steps of the method (300) according to one of Claims 8 to 10 to be carried out and/or controlled.

## Revendications

1. Procédé (200) d'identification d'une direction de collision d'un véhicule (100), le procédé (200) comprenant les étapes suivantes :
lecture d'un premier signal d'accélération (150) par une interface (165) vers un capteur d'accélération (130), le premier signal d'accélération (150) représentant une accélération longitudinale du véhicule (100) ;
comparaison (205) du premier signal d'accélération (150) à une première valeur de seuil (610) et à une deuxième valeur de seuil (710) pour définir un premier signal de direction de collision (152) indiquant une direction de collision, la première valeur de seuil (610) et la deuxième valeur de seuil (710) présentant des signes différents pour pouvoir distinguer deux directions opposées de la collision ;
comparaison (210) d'un deuxième signal d'accélération (155) à une autre valeur de seuil (810) pour définir un autre signal de direction de collision (157) indiquant une direction de collision, le deuxième signal d'accélération (155) représentant l'accélération du véhicule (100) soumis à un lissage ;
définition (215) d'un signal de résultat (160) en utilisant le premier signal de direction de collision (152) et l'autre signal de direction de collision (157), le signal de résultat (160) indiquant la direction indiquée par le premier signal de direction de collision (152) et l'autre signal de direction de collision (157) comme une direction de collision réelle, lorsque la direction de la collision du premier signal de direction de collision (152) et la direction de la collision de l'autre signal de direction de collision (157) concordent,
le premier signal de direction de collision (152) présentant, dans l'étape de comparaison (205) du premier signal d'accélération (150), une hystérésis similaire (620) indépendamment de la direction de la collision.

2. Procédé (200) selon la revendication 1, avec une étape de fourniture (220) du signal de résultat (160) par une ligne électrique unique.

3. Procédé (200) selon l'une des revendications précédentes, avec une exécution répétée des étapes du procédé (200) pour identifier un changement de la direction de collision réelle pendant la collision et pour l'afficher en utilisant le signal de résultat (160).

4. Procédé (200) selon la revendication 1, le deuxième signal d'accélération (155) étant lu en supplément dans l'étape de lecture (150), ou avec une étape de lissage (230) du premier signal d'accélération (225) en utilisant un filtrage passe-bas pour déterminer le deuxième signal d'accélération (155).

5. Procédé (200) selon la revendication 1, une durée de l'hystérésis (620) étant démarrée dans l'étape de comparaison (205) du premier signal d'accélération (150) lorsque le premier signal d'accélération (150) tombe en valeur en dessous de la première valeur de seuil (610) ou de la deuxième valeur de seuil (710) et n'étant pas démarrée lorsque le premier signal d'accélération (150) augmente en valeur au-dessus de la première valeur de seuil (610) ou de la deuxième valeur de seuil (710).

6. Procédé (200) selon l'une des revendications précédentes, le signal de résultat (160) étant défini en supplément dans l'étape de définition (215) en utilisant au moins un signal de capteur (167 ; 167'), le signal de capteur (167 ; 167') représentant un signal fourni par un capteur périphérique (131) du véhicule (100).

7. Procédé (200) selon l'une des revendications précédentes, un signal de début de collision (169), qui représente une collision identifiée, étant en outre défini dans l'étape de comparaison (205) du premier signal d'accélération (150) à la première valeur de seuil (610) et la deuxième valeur de seuil (710).

8. Procédé (300) destiné à piloter un système de protection contre les collisions (110) d'un véhicule (100) en cas d'identification d'une direction de collision du véhicule (100), le système de protection contre les collisions (110) comprenant au moins un sous-système (115, 116) avec au moins un premier moyen de protection contre les collisions (120, 121) associé à une première direction de collision et au moins un deuxième moyen de protection contre les collisions (125, 126) associé à une deuxième direction de collision, le procédé (300) comportant des étapes suivantes :
lecture (305) d'un signal de résultat (160), qui indique la direction de collision identifiée, le signal de résultat (160) étant défini dans un procédé (200) d'identification d'une direction de collision d'un véhicule (100) selon l'une des étapes 1 à 7 ; et
définition (310) d'un signal de commande (175) pour piloter au choix le premier moyen de protection contre les collisions (120, 121) ou le deuxième moyen de protection contre les collisions (125, 126), le signal de commande (175) étant défini en utilisant le signal de résultat (160).

9. Procédé (300) selon la revendication 8, le signal de commande (175) étant défini dans l'étape de définition (310) pour piloter le premier moyen de protection contre les collisions (120, 121) lorsque le signal de résultat (160) indique la première direction de collision, et pour piloter le deuxième moyen de protection contre les collisions (125, 126) lorsque le signal de résultat (160) indique la deuxième direction de collision.

10. Procédé (300) selon la revendication 8 ou 9, avec une étape de sélection (315) du sous-système (115, 116) avec le premier moyen de protection contre les collisions (120, 121) et le deuxième moyen de protection contre les collisions (125, 126) en utilisant un troisième signal d'accélération (182), qui représente une valeur du premier signal d'accélération (150), l'étape de sélection (315) étant exécutée avant ou simultanément à l'étape de définition.

11. Dispositif (105) avec une unité de calcul, une unité de mémoire et une interface qui est mise au point pour exécuter et/ou piloter les étapes du procédé (200) selon l'une des revendications 1 à 7 et les étapes du procédé (300) selon l'une des revendications 8 à 10 dans des unités correspondantes (135, 140, 145, 170, 172, 180 ; 1105).

12. Véhicule (100) avec un dispositif (105) selon la revendication 11, le véhicule (100) comportant au moins deux positions d'occupant (405, 406) disposées symétriquement en miroir et le premier moyen de protection contre les collisions (120, 121) et le deuxième moyen de protection contre les collisions (125, 126) étant disposés symétriquement en miroir.

13. Programme d'ordinateur avec des instructions qui, lorsque le programme est exécuté par le dispositif selon la revendication 11, ont pour effet que les étapes du procédé (200) selon l'une des revendications 1 à 7 et les étapes du procédé (300) selon l'une des revendications 8 à 10 sont exécutées et/ou pilotées.
